# EUROPÄISCHE PATENTSCHRIFT

(11) **EP 1 884 358 B1**
(45) Veröffentlichungstag und Bekanntmachung des Hinweises auf die Patenterteilung: **11.03.2009**
(21) Anmeldenummer: 07014140.3
(22) Anmeldetag: 19.07.2007
(51) Int. Cl.: B32B 27/40, B29C 67/20

(54) **Verfahren zur Herstellung von Mehrschichtfolien aus thermoplastischen Polyurethanen**
Method of preparation of a thermoplastic polyurethane multilayered film
Procédé de préparation d'un film thermoplastique multicouche en polyurethane

(30) Priorität: 01.08.2006 DE 102006035774
(43) Veröffentlichungstag der Anmeldung: 06.02.2008
(73) Patentinhaber: Epurex Films GmbH & Co. KG, 29656 Walsrode (DE)
(72) Erfinder: Kosthorst, Helge, 29664 Walsrode (DE); Schultze, Dirk, Dr., 29664 Walsrode (DE); Schrot, Frank, 29664 Walsrode (DE); Meins, Henning, 29664 Walsrode (DE)
(74) Vertreter: Perchenek, Nils

(56) Entgegenhaltungen:
- EP-A1- 0 896 976
- DE-A1-3102005 027 86
- US-A- 5 260 343
- US-A- 5 585 412

## Beschreibung

Die Erfindung betrifft ein Verfahren zur Herstellung von flexiblen Mehrschichtfolien mit mindestens einer Schicht aus thermoplastischen Polyurethanen (TPU) mit gasgefüllten, geschlossenzelligen Poren und mit niedrigen Dichten.

Einschichtige Folien aus thermoplastischen Polyurethanen (TPU), Verfahren zu ihrer Herstellung sowie ihre Verwendung sind beispielsweise aus EP-A 0 308 683, EP-A 0 526 858, EP 0 571 868 und EP-A 0 603 680 bekannt.

TPU können in Abhängigkeit der eingesetzten Isocyanate aliphatischen oder aromatischen Charakter besitzen. TPU haben üblicherweise einen Block- oder Segmentaufbau. Grundsätzlich unterscheidet man Hartsegmente, gebildet aus den zur Reaktion eingesetzten Diisocyanaten und kurzkettigen Diolen, und Weichsegmente, gebildet aus den langkettigen Diolen und Diisocyanaten.

Hartsegmente steuern die Festigkeit und die oberen Nutzungstemperaturen zu den TPU Eigenschaftsprofilen bei. Geeignete Diisocyanate sind beispielsweise 4,4'-Diphenylmethandiisocyanat, das hydriertes 4,4'-Diphenylmethandiisocyanat, 2,4-Toluoldiisocyanat und Hexamethylendiisocyanat. Kurzkettige Diole sind beispielsweise 1,4-Butandiol, 1,6-Hexandiol, Ethylenglycol und Diethylenglycol.

Weichsegmente entstehen aus der Reaktion von Isocyanatfunktionen mit polymeren Diolen, deren Molekulargewichte typischerweise zwischen 500 und 3000 liegen. Sie steuern die elastischen Eigenschaften und die Kälteflexibilität zu den Materialeigenschaften bei.

Man unterscheidet üblicherweise zwei Hauptgruppen bei den Polyolen, Polyetherdiole und Polyesterdiole. Die Polyetherdiole basieren beispielsweise auf Polytetrahydrofuran, Polyethylenoxid sowie Polypropylenoxid und deren Gemische. Die Polyesterdiole basieren typischerweise auf Adipaten, wie z.B. 1,4-Butandioladipat und 1,6-Hexandioladipat und Caprolacton. Cokondensate sind ebenfalls möglich.

Geschäumte Folien aus TPU sind beispielsweise aus DE-A 3 810 595 und der DE-A 4 117 649 bekannt. Diese geschäumten Folien aus TPU haben sich jedoch als ungünstig herausgestellt, da bereits unter geringen Drucken Flüssigkeiten durch solche Folien durchdringen. Ebenso ist die mechanische Belastbarkeit der Folienblase beim Blasfolienprozess derart gering, dass keine stabilen Prozessbedingungen langfristig eingestellt werden können.

Aufgabe war es daher, ein Verfahren zur Verfügung zu stellen, das es gestattet, TPU-Folien oder coextrudierte TPU-Folien herzustellen, die gute Abdichtungseigenschaften und mechanische Eigenschaften und geringe Dichten aufweisen und deren Herstellung, insbesondere beim Blasfolienextrusionsprozess unter stabilen Prozessbedingungen kontinuierlich erfolgen kann.

Diese Aufgabe konnte durch das erfindungsgemäße Verfahren gelöst werden.

Gegenstand der Erfindung ist ein Verfahren zur Herstellung flexibler Mehrschichtfolien, bei denen mindestens eine Schicht aus expandierten, thermoplastischen Polyurethanen mit einer Dichte von 0,3 - 0,8 g/cm³ besteht, dadurch gekennzeichnet, dass
a) thermoplastische Polyurethangranulate, mikroverkapselte Paraffine (Alkane) mit einem Siedepunkt von 25 bis 50°C als Treibmittel und gegebenenfalls Additive und Zusatzmittel miteinander vermischt werden,
b) das Gemisch aus a) anschließend in einem Extruder komprimiert und aufgeschmolzen wird,
c) die Schmelze in eine Coextrusionsringspaltdüse geführt wird und mit mindestens einer weiteren Schmelze aus Kunstoff übereinander gelegt wird,
d) die austretende ringförmige Schmelzefahne durch Anblasen mit Luft abgekühlt und anschließend flachgelegt und im Randbereich beschnitten wird,
e) die so hergestellten Folienbahnen gegebenenfalls aufgerollt werden.

In den coextrudierten Folien ist in mindestens einer Folienschicht aus TPU ein mikroverkapselter Kohlenwasserstoff als Treibmittel vorhanden, der ein physikalisches Expandieren bewirkt. Diese Mikrokapseln werden dem TPU-Granulat beigemischt, bevor das Granulat dem Extruder zugeführt wird, in dem das Gemisch dann aufgeschmolzen und homogenisiert wird. Die Schmelze wird danach zusammen mit mindestens einer weiteren Schmelze der Ringspaltdüse zugeführt und die austretende Schmelzefahne unter Anblasen von Luft abgekühlt (Blasfolienextrusionsverfahren). Die Expansion des Treibmittels erfolgt nach der Schmelzeverteilung im Werkzeug mit dem Düsenaustritt. Überraschenderweise kommt es bei der langen Verweilzeit im Blasfolienprozess nicht zu einer Entmischung, und es werden gleichmäßig verteilte geschlossenzellige Poren in der Schmelzefahne bzw. der Folienschicht erzeugt. Der so hergestellte Folienschlauch wird flachgelegt, seitlich geschnitten und die getrennten Folienbahnen separat aufgewickelt. Diese flexible Mehrschichtfolie mit einer Schicht aus thermoplastischen Polyurethanen mit einer bevorzugten Dichte von 0,3 bis 0,8 g/cm³ weist in dieser TPU-Schicht gasgefüllte, geschlossenzellige Poren auf.

Die Poren in der expandierten TPU-Schicht weisen bevorzugt Durchmesser zwischen 50 µm und 250 µm auf.

Der Siedepunkt der Paraffine liegt bevorzugt bei 25 bis 50°C. Bevorzugte Paraffine sind Pentane, insbesondere Isopentan.

Die mikroverkapselten Paraffine werden bevorzugt als Masterbatch in den Verarbeitungsprozess eingeführt. Das Masterbatch basiert vorzugsweise auf TPU, Ethylenvinylacetat (EVA), Polyethylen, Styrolacrylnitril oder Polystyrol (PS) als Trägermaterial.

Die Mikroverkapselung der Paraffine besteht bevorzugt aus Polyolefinen, Copolyolefinen, Styrolacrylnitril (SAN), TPU, Polyvinylchlorid (PVC), Polyethylen (PE), Ethylvinylacetat (EVA) oder Copolymeren daraus.

Zusätzlich zu der TPU-Schicht mit Mikrokapseln wird mindestens eine oder mehrere weitere Schichten aus Kunststoff, (z.B. TPU, Polyolefin, Polyamid (PA), SAN oder Copolyester) extrudiert. Die so erhaltenen coextrudierten Folien weisen zwei oder mehr Schichten auf.

Es können gegebenenfalls weitere TPU-Schichten mit oder ohne Mikrokapseln coextrudiert werden.

Bevorzugt liegt die Shore-Härte der eingesetzten TPU-Rohstoffe im Bereich von 80 Shore A bis 50 Shore D.

Geeignete thermoplastische Polyurethane sind beispielsweise auf dem Markt unter den Handelsnamen Desmopan^{®}, Elastollan^{®}, Pellethane^{®}, Estane^{®}, Morthane^{®} oder Texin^{®} erhältlich.

Bevorzugt sind Folien mit einer Gesamtliegebreite quer zur Maschinenlaufrichtung von größer 300 mm, besonders bevorzugt zwischen 800 mm und 2000 mm.

Bevorzugt ist in den coextrudierten Folienaufbauten mit den expandierten TPU-Schichten eine zur Folienmitte symmetrische Schichtenfolge.

Besonders bevorzugt ist in den coextrudierten Folien die mit Mikrokapseln expandierte TPU-Schicht bei drei- oder mehrschichtigen Aufbauten eine Mittelschicht.

Ebenso bevorzugt sind Aufbauten, bei denen expandierte Schichten als Aussenlagen weitere Schichten einschließen.

Besonders bevorzugt sind coextrudierte Aufbauten mit eingefärbten expandierten Außenschichten, insbesondere weiß eingefärbten expandierten Außenschichten. Diese eignen sich bevorzugt als Licht-Sperrschicht, kaschiert gegen mindestens eine textile Bahn.

Bei der Herstellung der erfindungsgemäßen Folie, können zusätzlich Additive und Zusatzmittel gegebenenfalls zugesetzt werden, wie z.B.
1. Antiblockmittel,
2. anorganische oder organische Abstandshalter,
3. Gleit- und Entformungsmittel,
4. Pigmente und Füllstoffe sowie
5. Stabilisatoren.

Derartige Additive und Zusatzmittel, die zugesetzt werden können, sind beispielsweise bei Gächter und Müller beschrieben in: Kunststoff-Additive, Carl Hanser Verlag München, 3. Ausgabe (1989).

Erfindungsgemäß bevorzugt sind Folien mit einer Gesamtdicke zwischen 100 µm und 3000 µm, besonders bevorzugt liegt die Gesamtdicke zwischen 300 µm und 1000 µm.

Durch die Kombination von elastischem TPU und mikroverkapselten Paraffinen können Folien mit Eigenschaften bereitgestellt werden, die für Dichtungszwecke notwendig sind und die sich aus reinem TPU nicht darstellen lassen. Darüber hinaus können die erfindungsgemäßen Folien für Dämpfungselemente eingesetzt werden.

Die Folien werden durch Blasfolienextrusion hergestellt.

Die erfindungsgemäßen Folien können auf mindestens einer Seite einer nachträglichen Verarbeitung unterworfen werden, z.B. einer Corona- oder Elektronenstrahlbehandlung.

Die erfindungsgemäß hergestellten Folien werden bevorzugt als Dämmmaterial, Dichtungsfolien bzw. -bahnen sowie als Dämpfungselemente eingesetzt.

Die erfindungsgemäß hergestellten Folien eignen sich bevorzugt zur Kaschierung gegen textile Flächengebilde.

Erfindungsgemäß hergestellte eingefärbte Folien eignen sich bevorzugt als Lichtsperrbahnen in Rollos und Faltstoren.

Die Erfindung soll anhand der nachfolgenden Beispiele näher erläutert werden.

### Beispiele

Die im Rahmen der nachfolgenden Beispiele und Vergleichsbeispiele hergestellten Folien wurden durch Blasfolienextrusion hergestellt. Geeignete Schneckenwerkzeuge sind in ihrem Aufbau z.B. von Wortberg, Mahlke und Effen in: Kunststoffe, 84 (1994) 1131-1138, von Pearson in: Mechanics of Polymer Processing, Elsevier Publishers, New York, 1985 oder der Fa. Davis-Standard in: Paper, Film & Foil Converter 64 (1990) S. 84 - 90 beschrieben. Werkzeuge (z.B. Düsen) zum Ausformen der Schmelze zu Folien sind u.a. von Michaeli in: Extrusions-Werkzeuge, Hanser Verlag, München 1991 erläutert.

### Beispiel A

Eine zweischichtige Folie wurde mit einem Zweischicht-Blasfolienwerkzeug hergestellt. Die Schicht (1) mit einer Dicke von 100 µm wurde aus Elastollan® 1185 von der Elastogran GmbH, einem handelsüblichen TPU mit einer Shore-A-Härte von 87 (gemessen nach DIN 53 505; entspricht einer Härte von ca. 36 Shore-D) und einem Ethylen-bis-stearylamid (EBS) und Silikate enthaltenen Masterbatch gebildet. Sämtliche für diese Schicht eingesetzten Rohstoffkomponenten wurden gemischt und gemeinsam in einem Extruder aufgeschmolzen.

Die andere Schicht (2) mit einer Dicke von 500 µm wurde aus einem handelsüblichen TPU mit einer Shore-A-Härte von 87 (gemessen nach DIN 53 505; entspricht einer Härte von ca. 36 Shore-D) und einem Masterbatch aus 50 Gew.-% TPU und 35 Gew.-% EVA sowie 15 Gew.-% mikroverkapseltes Isopentan gebildet. Sämtliche für diese Schicht eingesetzten Rohstoffkomponenten wurden gemischt und gemeinsam in einem Extruder aufgeschmolzen.

Die Extruder wurden bei Temperaturen von ca. 180°C betrieben. Die zwei Schmelzeströme wurden in einem Zweischicht-Blasfolienkopf mit einer Verarbeitungstemperatur von 195°C übereinander gelegt und durch eine Ringspaltdüse mit einem Durchmesser von 150 mm ausgetragen. Durch Anblasen mit Luft wurde die ringförmige Schmelzefahne abgekühlt, anschließend flachgelegt, geschnitten und die Folienbahnen mit einer Breite von 400 mm aufgewickelt.

### Beispiel B

Eine zweischichtige Folie wurde mit einem Zweischicht-Blasfolienwerkzeug hergestellt. Eine Schicht (1) mit einer Dicke von 630 µm wurde aus Elastollan® 1185 von der Elastogran GmbH, einem handelsüblichen TPU mit einer Shore-A-Härte von 87 (gemessen nach DIN 53 505; entspricht einer Härte von ca. 36 Shore-D) und einem Masterbatch aus 50 Gew.-% TPU und 35 Gew.-% Polystyrol sowie 15 Gew.-% mikroverkapseltes Isopentan gebildet. Sämtliche für diese Schicht eingesetzten Rohstoffkomponenten wurden gemischt und gemeinsam in einem Extruder aufgeschmolzen.

Die andere Schicht (2) mit einer Dicke von 100 µm wurde aus einem handelsüblichen Polyethylen mit einer Dichte von 0,92 g/cm³ (gemessen nach DIN EN ISO 1183) und einem MFR von 0,4 g/10 min (gemessen nach DIN EN ISO 1133 (2,16kg/190°C)) gebildet Die Rohstoffkomponente wurde mit einem Extruder aufgeschmolzen.

Die Extruder wurden bei Temperaturen von 180°C betrieben. Die zwei Schmelzeströme wurden in einem Zweischicht-Blasfolienkopf mit einer Verarbeitungstemperatur von 195°C übereinander gelegt und durch eine Ringspaltdüse mit einem Durchmesser von 150 mm ausgetragen. Durch Anblasen mit Luft wurde die ringförmige Schmelzefahne abgekühlt, anschließend flachgelegt, geschnitten und die Folienbahnen mit einer Breite von 400 mm aufgewickelt.

In einem zweiten Schritt wurde die Polyethylen-Schicht von der expandierten Dichtungsbahn getrennt.

### Vergleichsbeispiel 1

Mit Hilfe eines Einschicht-Blasfolienwerkzeuges wurde eine TPU-Folie in einer Dicke von 250 µm hergestellt. Als Rohstoffe wurden Elastollan^{®} 1185 von der Elastogran GmbH, ein handelsüblicher TPU mit einer Shore-A-Härte von 87 (gemessen nach DIN 53 505; entspricht einer Härte von ca. 36 Shore-D) und ein Masterbatch mit EBS-Wachs und Silikaten eingesetzt. Sämtliche Rohstoffkomponenten wurden gemischt und gemeinsam in einem Extruder aufgeschmolzen.

Der Extruder wurde bei einer Temperatur von ca. 180°C betrieben. Der Schmelzestrom wurde in einem Blasfolienkopf mit einer Verarbeitungstemperatur von 195°C durch eine Ringspaltdüse mit einem Durchmesser von 150 mm ausgetragen. Durch Anblasen mit Luft wurde die ringförmige Schmelzefahne abgekühlt, anschließend flachgelegt, geschnitten und die so hergestellten Folienbahnen mit einer Breite von 400 mm aufgewickelt.

### Vergleichsbeispiel 2

Mit Hilfe eines Einschicht-Blasfolienwerkzeuges wurde eine expandierte TPU-Folie in einer Dicke von 210 µm hergestellt. Als Rohstoffe wurden Elastollan® 1185 von der Elastogran GmbH, ein handelsüblicher TPU mit einer Shore-A-Härte von 87 (gemessen nach DIN 53 505; entspricht einer Härte von ca. 36 Shore-D), und das Masterbatch Elastollan® Konzentrat V 2893 der Fa. Elastogran GmbH, welches unter Wärmezufuhr ein Gas generiert, eingesetzt.

Die Rohstoffkomponenten wurden gemischt und gemeinsam in einem Extruder aufgeschmolzen.

Der Extruder wurde bei einer Temperatur von ca. 180°C betrieben. Der Schmelzestrom wurde in einem Blasfolienkopf mit einer Verarbeitungstemperatur von 195°C durch eine Ringspaltdüse mit einem Durchmesser von 150 mm ausgetragen. Durch Anblasen mit Luft wurde die ringförmige Schmelzefahne abgekühlt, anschließend flachgelegt, geschnitten und die getrennten Folienbahnen mit einer Breite von 400 mm separat aufgewickelt.

### Vergleichsbeispiel 3

Mittels eines Extruders wurde ein handelsüblicher TPU, mit einer Shore-A-Härte von 95 (gemessen nach DIN 53 505; entspricht einer Härte von ca. 52 Shore-D) aufgeschmolzen und der Schmelzestrom durch eine Spinndüse gepresst. Nach Austritt aus der Düsenplatte wurden die entstandenen Filamente, die noch in geschmolzener Form vorlagen, durch einen Luftstrom abgekühlt, gleichzeitig aus der Schmelze gestreckt und auf einem Träger abgelegt. Anschließend wurde dieses Fasergelege durch einen beheizten Kalander mit Rautenprägung mit einer Dicke von 750 µm verfestigt.

In der nachfolgenden Tabelle 1 sind charakteristische Daten der im Rahmen der Beispiele und Vergleichsbeispiele hergestellten Folien wiedergegebenen. Diese Daten zeigen deutlich, dass die in den Beispielen hergestellten erfindungsgemäßen Folien den im Rahmen der Vergleichsbeispiele hergestellten Folien überlegen sind.

**Tabelle 1 Eigenschaften der im Rahmen der Beispiele und Vergleichsbeispiele hergestellten Folien**

| **Eigenschaft** | **Bestimmungs- Methode** | **Einheit** | **Beispiel A** | **Beispiel B (ohne PE-Träger gemessen)** | **Vergleichsbeispiel 1 TPU kompakt** | **Vergleichsbeispiel 2 TPU chemisch geschäumt** | **Vergleichsbeispiel 3 TPU Nonwoven** |
|---|---|---|---|---|---|---|---|
| Dicke | DIN 53122 | µm | 600 | 6630 | 250 | 210 | 750 |
| Flächengewicht | DIN 53352 | g/m2 | 400 | 260 | 286 | 150 | 353 |
| Reißkraft | ISO 527 | N | 65 | 35 | 95 | 12 | 25 |
| Bruchspannung | ISO 527 | MPa | 20 | 10 | 65 | 9 | 5 |
| Reißdehnung | ISO 527 | % | 480 | 470 | 500 | 37Q | 300 |
| Wasserdichtigkeit | DIN EN 20811 | °C | Gut (>1 bar) | Gut (>1 bar ) | Gut (>1 bar) | Schlecht (0,1 bar) | Schlecht (0,2 bar) |
| Wasserdampfdurchlässigkeit 38°C/90% r.F. | DIN 53122 | g/m^{2*d} | 80 | 110 | 210 | Nicht messbar | Nicht messbar |
| Transmittance / Lichtdurchlässigkeit | ASTM D 1003 | % | 59 | 46 | 92 | 76 | 35 |
| PU-Reaktivschaumhaftung | | | Sehr gut | Sehr gut | Gut | Gut | Nicht messbar |

Aus Tabelle 1 ist deutlich erkennbar, dass die in den Beispielen A und B hergestellten erfindungsgemäßen expandierten Folienaufbauten, der in Vergleichsbeispiel 1 hergestellten kompakten Folie hinsichtlich Flächengewicht im Verhältnis zur Dicke, also einem geringen Gewicht bei hoher Dicke, überlegen sind. Die chemisch geschäumte Folie aus Vergleichsbeispiel 2 und das TPU-Nonwoven aus Vergleichsbeispiel 3 sind wiederum durchlässig für Flüssigkeiten und Gase.

Die Bruchspannung und die Reißdehnung der erfindungsgemäßen Folien sind höher als die der chemisch geschäumten TPU-Folie aus Vergleich 2 und als die der Folie aus Vergleich 3. Der Quotient Flächengewicht/Dicke (entspricht bei homogenen Stoffen der Dichte) liegt bei den Folien aus Beispiel A und Beispiel B zwischen 0,41 und 0,67 g/cm³. Sie liegen also im gleichen Bereich wie das leichte, aber undichte TPU-Nonwoven mit 0,47g/cm aus Vergleich 3. Das kompakte TPU hat mit einer Dichte von 1,14 g/cm³ einen ca. 2,5fach höheren Quotienten aus Flächengewicht und Dicke und hat daher bei gleicher Dicke ein deutlich höheres Gewicht als die erfindungsgemäße Folie.

Die Haftung zu Polyurethan-Reaktivschäumen wird durch die Aufschäumung nicht beeinträchtigt und ist sehr gut.

## Patentansprüche

1. Verfahren zur Herstellung flexibler Mehrschichtfolien, bei denen mindestens eine Schicht aus expandierten, thermoplastischen Polyurethanen mit einer Dichte von 0,3 - 0,8 g/cm³ besteht, **dadurch gekennzeichnet, dass**
a) thermoplastische Polyurethangranulate, mikroverkapselte Paraffine (Alkane) mit einem Siedepunkt von 25 bis 50°C als Reibmittel und gegebenenfalls Additive und Zusatzmittel miteinander vermischt werden,
b) das Gemisch aus a) anschließend in einem Extruder komprimiert und aufgeschmolzen wird,
c) die Schmelze in eine Coextrusionsringspaltdüse geführt wird und mit mindestens einer weiteren Schmelze aus Kunstoff übereinander gelegt wird,
d) die austretende ringförmige Schmelzefahne durch Anblasen mit Luft abgekühlt und anschließend flachgelegt und im Randbereich beschnitten wird;
e) die so hergestellten Folienbahnen gegebenenfalls aufgerollt werden.

2. Verfahren gemäß Anspruch 1, **dadurch gekennzeichnet, dass** die Mikroverkapselung aus Styrolacrylnitril, Poyvinylchlorid, Polyethylen, Ethylvinylacetat, Polyolefinen, Copolyolefmen, thermoplastischen Polyurethanen oder Copolymeren daraus besteht.

3. Verfahren gemäß Anspruch 1, **dadurch gekennzeichnet, dass** als Paraffine Pentane oder Pentangemische eingesetzt werden.

4. Verfahren gemäß Anspruch 1, **dadurch gekennzeichnet, dass** die mikroverkapselten Paraffine in Form eines Masterbatches eingesetzt werden.

5. Verfahren gemäß Anspruch 4, **dadurch gekennzeichnet, dass** der Träger des Masterbatches aus thermoplastischem Polyurethan, Polyethylen, Ethylvinylacetat, Styrolacrylnitril oder Polystyrol besteht.

6. Verfahren gemäß Anspruch 1, **dadurch gekennzeichnet, dass** als Kunststoff für die weiteren Kunststoffschmelzen thermoplastisches Polyurethan, Polyolefin, Polyamid, Styrolacrylnitril oder Copolyester eingesetzt wird.

## Claims

1. Process for the production of flexible multilayer films in which at least one layer consists of expanded thermoplastic polyurethanes having a density of from 0.3 to 0.8 g/cm³, **characterised in that**
a) thermoplastic polyurethane granules, microencapsulated paraffins (alkanes) having a boiling point of from 25 to 50°C, as blowing agent, and optionally additives and added ingredients are mixed with one another,
b) the mixture from a) is then compressed and melted in an extruder,
c) the melt is guided into a coextrusion ring-gap nozzle, and this melt and at least one further melt of plastics material are placed one above the other,
d) the ring-shaped melt web that emerges is cooled by being blown with air and is then laid flat and cut in the edge region,
e) the film sheets so produced are optionally rolled up.

2. Process according to claim 1, **characterised in that** the microencapsulation consists of styrene acrylonitrile, polyvinyl chloride, polyethylene, ethyl vinyl acetate, polyolefins, copolyolefins, thermoplastic polyurethanes or copolymers thereof.

3. Process according to claim 1, **characterised in that** pentanes or pentane mixtures are used as the paraffins.

4. Process according to claim 1, **characterised in that** the microencapsulated paraffins are used in the form of a masterbatch.

5. Process according to claim 4, **characterised in that** the carrier for the masterbatch consists of thermoplastic polyurethane, polyethylene, ethyl vinyl acetate, styrene acrylonitrile or polystyrene.

6. Process according to claim 1, **characterised in that** the plastics material used for the further plastics melts is thermoplastic polyurethane, polyolefin, polyamide, styrene acrylonitrile or copolyester.

## Revendications

1. Procédé pour la préparation de feuilles multicouches flexibles, dans lesquelles au moins une couche est constituée de polyuréthane expansé thermoplastique avec une densité de 0,3-0,8 g/cm³, **caractérisé en ce que**
a) on mélange ensemble des granulés de polyuréthane thermoplastique, des paraffines micro-encapsulées (alcane) avec un point d'ébullition de 25 à 50°C comme agent gonflant et éventuellement des additifs et des auxiliaires,
b) on comprime et on fait fondre ensuite le mélange de a) sur une extrudeuse,
c) on introduit la masse en fusion dans une buse à fente annulaire de co-extrusion et on dépose au-dessus au moins une autre masse en fusion de matière plastique,
d) on refroidit et on étale ensuite la surface de masse en fusion annulaire en insufflant de l'air et on la découpe dans le domaine de bord,
e) on enroule éventuellement les bandes de feuilles ainsi préparées.

2. Procédé selon la revendication 1, **caractérisé en ce que** la micro-encapsulation est constituée de styrène-acrylonitrile, de poly(chlorure de vinyle), de polyéthylène, de vinylacétate d'éthyle, de polyoléfines, de copolyoléfines, de polyuréthanes thermoplastiques ou de copolymères de ceux-ci.

3. Procédé selon la revendication 1, **caractérisé en ce que** l'on utilise comme paraffines du pentane ou des mélanges de pentane.

4. Procédé selon la revendication 1, **caractérisé en ce que** l'on utilise les paraffines micro-encapsulées dans la forme d'un lot mère.

5. Procédé selon la revendication 4, **caractérisé en ce que** le support du lot mère est constitué de polyuréthane thermoplastique, de polyéthylène, de vinylacétate d'éthyle, de styrène-acrylonitrile ou de polystyrène.

6. Procédé selon la revendication 1, **caractérisé en ce que** l'on utilise comme matière plastique pour les autres masses en fusion de matière plastique du polyuréthane thermoplastique, une polyoléfine, du polyamide, du styrène-acrylonitrile ou un copolyester.
